# EUROPÄISCHE PATENTSCHRIFT

(11) **EP 3 543 099 B1**
(45) Veröffentlichungstag und Bekanntmachung des Hinweises auf die Patenterteilung: **25.10.2023**
(21) Anmeldenummer: 19161471.8
(22) Anmeldetag: 08.03.2019
(51) Int. Cl.: B62J 7/00, B62K 3/00, B62K 15/00, B62K 7/04

(54) **TRANSPORTMITTEL ZUM TRANSPORTIEREN EINES TRANSPORTGUTS UND/ODER EINER PERSON, VERFAHREN ZUM BETREIBEN EINES TRANSPORTMITTELS SOWIE TRANSPORTSYSTEM**
MEANS OF TRANSPORT FOR TRANSPORTING A TRANSPORTED GOOD AND/OR A PERSON, METHOD FOR OPERATING A MEANS OF TRANSPORT AND TRANSPORT SYSTEM
MOYEN DE TRANSPORT PERMETTANT DE TRANSPORTER UNE MARCHANDISE À TRANSPORTER ET/OU UNE PERSONNE, PROCÉDÉ DE FONCTIONNEMENT D'UN MOYEN DE TRANSPORT AINSI QUE SYSTÈME DE TRANSPORT

(30) Priorität: 22.03.2018 DE 102018204383
(43) Veröffentlichungstag der Anmeldung: 25.09.2019
(73) Patentinhaber: AUDI AG, 85045 Ingolstadt (DE)
(72) Erfinder: Beutler, Stephan, 85049 Ingolstadt (DE); Ertl, Maximilian, 85110 Kipfenberg (DE)

(56) Entgegenhaltungen:
- WO-A1-2018/013094
- WO-A1-2018/017053
- CN-B- 103 587 618
- DE-A1- 19 711 042
- US-A- 3 659 865
- US-A1- 2003 094 315
- US-A1- 2004 056 442
- US-A1- 2005 173 175
- US-A1- 2013 033 012
- US-A1- 2018 037 288
- US-B1- 9 302 728

## Beschreibung

Die Erfindung betrifft ein Transportmittel zum Transportieren eines Transportguts und/oder einer Person sowie ein Verfahren zum Betreiben eines Transportmittels und ein Transportsystem.

Aus dem Stand der Technik ist beispielsweise die Druckschrift DE 10 2009 050 331 A1 bekannt. Diese betrifft ein Transportsystem zum Handhaben von Gepäckstücken in der Gepäckabwicklung auf Flughäfen, bei dem die Gepäckstücke in Bereichen zwischen Check-In und Flugzeug transportiert werden. Es ist vorgesehen, dass für den Transport der Gepäckstücke, mindestens über einen Teilstreckenbereich, flurgebundene, automatisch gesteuerte und geführte lenkbare Trägerfahrzeuge mit eigenem Fahrantrieb vorgesehen sind, auf denen jeweils ein Gepäckstück aufliegend zu einem festgelegten Zielort transportierbar ist. Das Dokument US 2018/037288 A1 offenbart den Oberbegriff der unabhängigen Ansprüche 1 und 4, die sich auf ein Transportmittel bzw. ein Verfahren zum Betreiben des Transportmittels beziehen.

Es ist Aufgabe der Erfindung, ein Transportmittel zum Transportieren eines Transportguts und/oder einer Person vorzuschlagen, welches äußerst flexibel einsetzbar ist.

Dies wird mit einem Transportmittel zum Transportieren eines Transportguts und/oder einer Person mit den Merkmalen des Anspruchs 1 erreicht. Dieses zeichnet sich durch einen in einer Karosserie des Transportmittels ausgebildeten Stauraum zur Aufnahme des Transportguts sowie eine Stand- und/oder Sitzfläche für die Person aus, wobei eine Abdeckung bezüglich der Karosserie und/oder des Stauraums verlagerbar ist, die in einer ersten Stellung den Stauraum verschließt und in einer zweiten Stellung freigibt, wobei die Abdeckung einen Halter für die Person aufweist, der in der zweiten Stellung oberhalb der Stand- und/oder Sitzfläche zum Halten der Person angeordnet ist.

Das Transportmittel ist beispielsweise Bestandteil eines Transportsystems, welches eine Vielzahl von Transportmitteln umfasst. Wenigstens eines der Transportmittel des Transportsystems, vorzugsweise jedoch alle Transportmittel des Transportsystems, sind gemäß den Ausführungen im Rahmen dieser Beschreibung ausgestaltet. Sofern also im Rahmen dieser Beschreibung von dem Transportmittel oder dem wenigstens einen Transportmittel die Rede ist, so sind die Ausführungen stets auf weitere Transportmittel beziehungsweise alle Transportmittel des Transportsystems übertragbar. Das Transportsystem stellt das Transportmittel einem Benutzer, also der Person, zumindest temporär, vorzugsweise lediglich temporär, oder dauerhaft zur Verfügung. Das Transportmittel ist jedoch vorzugsweise stets dem Transportsystem zugeordnet und steht nicht im Eigentum des Benutzers. Das Transportmittel dient grundsätzlich dem Transport einer Ladung. Diese liegt in Form des Transportguts und/oder der Person vor.

Das Transportsystem weist bevorzugt eine Vielzahl von Transportmitteln auf. Die Transportmittel können grundsätzlich untereinander verschieden sein oder zumindest teilweise oder insgesamt identisch aufgebaut sein. Jedes der Transportmittel ist besonders bevorzugt unabhängig von jedem anderen der Transportmittel bewegbar. Das bedeutet insbesondere, dass jedes der Transportmittel völlig autonom betreibbar ist, also beispielsweise autonom und automatisch einen ihm zugewiesenen Transportstartort und/oder Transportzielort anfährt beziehungsweise anfahren kann. Hierzu ist das Transportmittel beziehungsweise sind die Transportmittel entsprechend ausgestaltet, weist/weisen also zum Beispiel Mittel zur Durchführung eines autonomen beziehungsweise selbstständigen Fahrbetriebs auf. Diese Mittel können insbesondere eine Navigationseinrichtung, eine Routenfindungseinrichtung, eine Umfelderkennungseinrichtung und/oder dergleichen umfassen.

Das Transportmittel ist bevorzugt emissionslos, erzeugt bei seinem Betrieb also keine oder nahezu keine Abgase. Dies wird beispielsweise durch einen rein elektrischen Betrieb des Transportmittels gewährleistet. Besonders bevorzugt verfügt insoweit das Transportmittel über eine elektrische Maschine zu seinem Antrieb sowie einen entsprechenden Energiespeicher für die zum Betreiben des Antriebs benötigte elektrische Energie. Zusätzliche Anforderungen an das Transportmittel können sich aus gegebenenfalls einzuhaltenden Sicherheitsbestimmungen des Betriebsorts ergeben, insbesondere falls das Transportmittel auf öffentlichem Gebiet, beispielsweise öffentlichen Straßen, betreibbar sein soll.

Das Transportmittel verfügt über die Karosserie, in welchem der Stauraum ausgebildet ist. Die Karosserie kann in Form eines den Stauraum aufnehmenden Gehäuses vorliegen. Sie kann jedoch auch den Aufbau und/oder das Fahrgestell des Transportmittels bezeichnen. Der Stauraum dient zur Aufnahme des Transportguts. Das Transportgut liegt beispielsweise in Form wenigstens eines Gepäckstücks vor, sodass der Stauraum zur Aufnahme des wenigstens einen Gepäckstücks vorgesehen und ausgebildet ist. Beispielsweise ist der Stauraum hinsichtlich seiner Abmessungen an übliche Gepäckstücke angepasst. Zusätzlich verfügt das Transportmittel über die Stand- und/oder Sitzfläche, welche bevorzugt ebenfalls an der Karosserie des Transportmittels ausgebildet ist und einer Unterbringung der Person dient. Hierunter ist zu verstehen, dass die Person sich auf die Stand- und/oder Sitzfläche stellen oder sich auf diese setzen kann. In ersterem Fall ist eine Ausgestaltung der Stand- und/oder Sitzfläche als reine Standfläche und in letzterem Fall als reine Sitzfläche realisiert.

Weiterhin verfügt das Transportmittel über die Abdeckung, die bezüglich der Karosserie und/oder des Stauraums verlagerbar, beispielsweise linear verlagerbar und/oder schwenkbar verlagerbar, ist. Die Abdeckung ist in wenigstens zwei Stellungen anordenbar, nämlich in der ersten Stellung und der zweiten Stellung. In der ersten Stellung ist die Abdeckung zum Verschließen des Stauraums angeordnet, sodass ein Zugriff von außen auf den Stauraum durch die Abdeckung verhindert wird. In der zweiten Stellung hingegen gibt die Abdeckung den Stauraum frei, sodass ein freier Zugriff auf den Stauraum sowie das in diesem angeordnete Transportgut möglich ist beziehungsweise ermöglicht wird.

Die Verlagerung der Abdeckung erfolgt bevorzugt mittels eines geeigneten Antriebs, beispielsweise eines elektromotorischen Antriebs. Die Abdeckung kann jedoch auch zur manuellen Verlagerung durch die Person ausgebildet sein. Besonders bevorzugt ist der Abdeckung wenigstens ein Riegel zugeordnet, welcher einer Verriegelung der Abdeckung bezüglich der Karosserie und/oder des Stauraums in der ersten Stellung und/oder der zweiten Stellung dient. Während die Abdeckung mittels des Riegels verriegelt ist, ist sie also in der derzeit vorliegenden Stellung, also beispielsweise der ersten Stellung oder der zweiten Stellung, dauerhaft gehalten. Zu einer Verlagerung der Abdeckung bezüglich der Karosserie und/oder des Stauraums aus dieser Stellung heraus muss die Abdeckung zunächst entriegelt werden, nämlich durch entsprechende Einstellung des Riegels. Der Riegel ist besonders bevorzugt vorgesehen, falls die Abdeckung durch die Person manuell verlagerbar ist, um ein unbefugtes Öffnen des Stauraums beziehungsweise ein Verlagern der Abdeckung in die zweite Stellung zu verhindern.

Die Abdeckung verfügt über den Halter für die Person, der in der zweiten Stellung oberhalb der Stand- und/oder Sitzfläche angeordnet ist. Die Anordnung des Halters in der zweiten Stellung ist derart, dass die Person gehalten wird oder ganz allgemein zum Halten der Person dient. Ist die Stand- und/oder Sitzfläche als Standfläche ausgebildet, so kann der Halter beispielsweise zum Angreifen durch die Person vorgesehen und ausgebildet sein und hierzu beispielsweise in Gestalt eines Griffs vorliegen. Die Person kann sich also während des Fahrbetriebs des Transportmittels an dem Halter beziehungsweise dem Griff festhalten während sie auf der Standfläche steht. Bei der Ausgestaltung der Stand- und/oder Sitzfläche als Sitzfläche kann der Halter beispielsweise die Sitzfläche wenigstens bereichsweise oder sogar vollständig umgreifen, sodass ein Herunterfallen der Person von dem Transportmittel zuverlässig verhindert ist. Bevorzugt verfügt der Halter zudem über wenigstens eine Armlehne für die Person, welche diese während des Sitzens auf der Sitzfläche zum Abstützen benutzen kann.

Das beschriebene Transportmittel ist äußerst flexibel einsetzbar. Beispielsweise kann es zum Transportieren allein des Transportguts von einem Transportstartort zu einem Transportzielort dienen, insbesondere ohne die Person. Hierdurch wird ein unabhängig von der Person erfolgender Transport des Transportguts zu dem Transportzielort sichergestellt, vorzugsweise ein vollständig autonomer Transport. Es kann also beispielsweise vorgesehen sein, dass die Person vor dem Transport an dem Transportstartort den Transportzielort an dem Transportmittel einstellt und dieses nachfolgend das in dem Stauraum angeordnete Transportgut selbsttätig zu dem Transportzielort transportiert, ohne dass die Person beteiligt ist. In diesem Fall wird die Abdeckung während des Transports in der ersten Stellung angeordnet, um einen unbefugten Zugriff auf das Transportgut zu unterbinden.

Ebenso kann das Transportmittel dem Transport allein der Person dienen. Hierzu wird die Abdeckung in die zweite Stellung verlagert, sodass sich die Person an dem Halter festhalten kann beziehungsweise von diesem gehalten wird, während sie auf der Stand- und/oder Sitzfläche steht oder sitzt. Während des Transports kann die Person jedoch auch das Transportgut mitführen. Hierzu kann das Transportgut vor dem Transport in dem Stauraum angeordnet werden, während die Abdeckung in der zweiten Stellung vorliegt. Anschließend steigt die Person auf das Transportmittel und lässt sich zusammen mit ihrem Transportgut zu dem Transportzielort transportieren.

Hierbei verbleibt die Abdeckung während des Transports, also zumindest bis zu dem Erreichen des Transportzielorts, in der zweiten Stellung, sodass die Abdeckung dem Halten der Person dient. Das bedeutet, dass das Transportgut beziehungsweise der Stauraum während des Transports von außen zugänglich bleibt. Dies ist jedoch unproblematisch oder sogar erwünscht, weil die Person ihr Transportgut begleitet. Das Transportmittel kann beispielsweise auf einem Bahnhof, auf einem Flughafen, in einem Einkaufszentrum oder dergleichen eingesetzt werden. Beispielsweise kann das Transportmittel genutzt werden, um das Transportgut und/oder die Person zwischen einem Parkplatz, einer Haltestelle oder einem Bahnhof einerseits und einem Abfahrtsgleis, einer Parkposition eines Flugzeugs oder dergleichen zu transportieren.

Eine Ausgestaltung der Erfindung sieht vor, dass die Abdeckung um eine Drehachse des Stauraums schwenkbar gelagert ist. Die schwenkbare Lagerung der Abdeckung ermöglicht auf konstruktiv besonders einfache Art und Weise einerseits das Verschließen des Stauraums in der ersten Stellung und andererseits der entsprechenden Anordnung des Halters in der zweiten Stellung, sodass der Halter zum Halten der Person angeordnet ist. In einem nicht beanspruchten Beispiel ist die Abdeckung unmittelbar an der Karosserie schwenkbar gelagert. Sie kann jedoch auch an einem anderen Element des Transportmittels schwenkbar gelagert sein, sodass schlussendlich eine mittelbare Lagerung der Abdeckung an der Karosserie vorliegt.

Eine Ausführungsform der Erfindung sieht vor, dass die Drehachse der Abdeckung mit einer Radachse des Transportmittels zusammenfällt. Das Transportmittel verfügt zumindest über die Radachse, vorzugsweise jedoch über mehrere beabstandet voneinander angeordnete Radachsen. Jeder Radachse sind vorzugsweise mehrere Räder des Transportmittels zugeordnet. Beispielsweise verfügt jede Radachse über zwei Räder. Die Radachse beziehungsweise die Radachsen dienen dem Antreiben des Transportmittels. Das Anordnen der Drehachse der Abdeckung derart, dass sie mit der Radachse des Transportmittels zusammenfällt, ermöglicht eine besonders platzsparende Drehlagerung der Abdeckung. Hierzu ist die Abdeckung beispielsweise auf der der Karosserie abgewandten Seite der Räder drehbar gelagert oder alternativ zwischen der Karosserie und den Rädern.

Eine Weiterbildung der Erfindung sieht vor, dass die Abdeckung an einer der Radachse zugeordneten Radnabe drehbar gelagert ist. Die Radnabe dient der Anbindung eines Rads des Transportmittels an die Radachse. Die Radnabe ist also beispielsweise starr mit der Radachse verbunden und über diese antreibbar. Es kann jedoch auch sein, dass die Radnabe mit einem Einzelradantrieb des Transportmittels ausgerüstet ist, also unabhängig von anderen Radnaben der Radachse antreibbar ist. Die Lagerung der Abdeckung an der Radnabe ermöglicht wiederum die bereits vorstehend erwähnte platzsparende Ausgestaltung.

Schließlich kann im Rahmen einer weiteren nicht beanspruchten Ausgestaltung vorgesehen sein, dass an der Abdeckung ein Bildschirm angeordnet ist, der in der zweiten Stellung oberhalb der Stand- und/oder Sitzfläche zur Benutzung durch die Person angeordnet ist. Der Bildschirm dient beispielsweise der Anzeige wenigstens einer Information, wobei unter der Information ein Status des Transportmittels verstanden werden kann. Auch die Anzeige von Werbung als Information kann vorgesehen sein. Der Bildschirm ist derart an der Abdeckung angeordnet, dass er in der zweiten Stellung für die Person sichtbar ist, insbesondere vollständig sichtbar. In anderen Worten soll der Bildschirm für die Person in der zweiten Stellung benutzbar sein.

Beispielsweise ist es vorgesehen, dass eine Bildschirmfläche beziehungsweise Anzeigefläche des Bildschirms in der zweiten Stellung waagerecht angeordnet oder nach oben gerichtet ist, wohingegen sie in der ersten Stellung nach unten gerichtet ist, also in Richtung einer Bodenfläche, auf welcher das Transportmittel angeordnet ist. In anderen Worten ist der Bildschirm in der ersten Stellung nicht durch die Person nutzbar. Vielmehr ist er beziehungsweise seine Bildschirmfläche nicht ohne weiteres für die Person sichtbar.

Es kann jedoch auch eine Ausgestaltung des Transportmittels vorgesehen sein, bei welcher der Bildschirm sowohl in der ersten Stellung als auch in der zweiten Stellung für die Person sichtbar ist. Beispielsweise ist hierbei der Bildschirm derart angeordnet, dass er in der ersten Stellung derart vorliegt, dass eine neben dem Transportmittel stehende oder sich bewegende Person die Bildschirmfläche sehen kann. In der zweiten Stellung ist er hingegen derart angeordnet, dass die auf der Stand- und/oder Sitzfläche befindliche Person die Bildschirmfläche sehen kann. Die Verwendung des Bildschirms ermöglicht auf einfache Art und Weise das Bereitstellen von Informationen für die Person und dient beispielsweise ihrer Unterhaltung während des Transports.

Die Erfindung betrifft weiterhin ein Verfahren zum Betreiben eines Transportmittels zum Transportieren eines Transportguts und/oder einer Person, insbesondere eines Transportmittels gemäß den Ausführungen im Rahmen dieser Beschreibung. Dabei ist vorgesehen, dass das Transportmittel einen in einer Karosserie des Transportmittels ausgebildeten Stauraum zur Aufnahme des Transportguts sowie eine Stand- oder Sitzfläche für die Person aufweist, wobei eine Abdeckung bezüglich der Karosserie und/oder des Stauraums verlagert werden kann, die in einer ersten Stellung den Stauraum verschließt und in einer zweiten Stellung freigibt, wobei die Abdeckung einen Halter für die Person aufweist, der in der zweiten Stellung oberhalb der Stand- und/oder der Sitzfläche zum Halten der Person angeordnet ist.

Auf die Vorteile einer derartigen Ausgestaltung des Transportmittels beziehungsweise einer derartigen Vorgehensweise wurde bereits hingewiesen. Sowohl das Transportmittel als auch das Verfahren zu seinem Betreiben können gemäß den Ausführungen im Rahmen dieser Beschreibung weitergebildet sein, sodass insoweit auf diese verwiesen wird.

Eine Ausgestaltung der Erfindung sieht vor, dass an dem Transportmittel durch die Person aus einem ersten Betriebsmodus und einem zweiten Betriebsmodus ein Betriebsmodus ausgewählt und an dem Transportmittel eingestellt werden kann, wobei in dem ersten Betriebsmodus die Abdeckung in der ersten Stellung angeordnet und ein Fahrbetrieb des Transportmittels für einen Transportstartort zu einem Transportzielort ohne die Person durchgeführt wird und in dem zweiten Betriebsmodus die Abdeckung in der zweiten Stellung angeordnet und der Fahrbetrieb von dem Transportstartort zu dem Transportzielort mit der auf der Stand- und/oder Sitzfläche befindlichen Person durchgeführt wird.

Das Transportmittel verfügt also über eine Eingabemöglichkeit für den ausgewählten Betriebsmodus. Der Betriebsmodus ist aus dem ersten Betriebsmodus und dem zweiten Betriebsmodus durch die Person auswählbar. In dem ersten Betriebsmodus ist es vorgesehen, die Abdeckung während des Fahrbetriebs in der ersten Stellung anzuordnen, wohingegen in dem zweiten Betriebsmodus die Abdeckung während des Fahrbetriebs in der zweiten Stellung angeordnet wird. Das bedeutet, dass in dem ersten Betriebsmodus das Transportmittel allein dem Transport des Transportguts ohne Begleitung durch die Person dient. In der zweiten Transportart wird hingegen das Transportgut von der Person begleitet oder zumindest Transportmittel auf eine solche Begleitung eingestellt.

Beispielsweise ist es vorgesehen, dass das Einstellen des ausgewählten Betriebsmodus anhand einer Belegung der Stand- und/oder Sitzfläche erfolgt. Hierzu ist diese mit einem entsprechenden Sensor versehen, um die Belegung der Stand- und/oder Sitzfläche festzustellen. Wird bei dem Einleiten des Fahrbetriebs oder während des Fahrbetriebs festgestellt, dass die Person sich nicht auf der Stand- und/oder Sitzfläche befindet, so wird die Abdeckung in der ersten Stellung angeordnet beziehungsweise aus der zweiten Stellung in die erste Stellung verlagert.

Wird hingegen festgestellt, dass sich die Person auf der Stand- und/oder Sitzfläche befindet, wird die Abdeckung in der zweiten Stellung angeordnet beziehungsweise in dieser gehalten. Unter dem Fahrbetrieb ist grundsätzlich der Transport des Transportguts und/oder der Person von dem Transportstartort zu dem Transportzielort zu verstehen. Der Fahrbetrieb liegt insoweit vor, solange sich das Transportmittel auf der den Transportstartort mit dem Transportzielort verbindenden Strecke befindet. Die beschriebene Vorgehensweise ermöglicht einen äußerst flexiblen Einsatz des Transportmittels.

Eine weitere bevorzugte Ausgestaltung der Erfindung sieht vor, dass in dem ersten Betriebsmodus der Stauraum mittels der Abdeckung verschlossen gehalten wird, bis der Transportzielort erreicht ist und/oder die Person ein Öffnen der Abdeckung an dem Transportmittel einstellt. Während des Fahrbetriebs in dem ersten Betriebsmodus soll insoweit der Stauraum verschlossen bleiben, sodass ein unbefugter Zugriff auf diesen beziehungsweise das Transportgut mittels der Abdeckung verhindert wird. Die Abdeckung wird zumindest solange in der ersten Stellung gehalten, bis der Transportzielort erreicht ist. Zusätzlich oder alternativ kann es vorgesehen sein, die Abdeckung erst dann zu öffnen, wenn die Person dies an dem Transportmittel einstellt. Bevorzugt ist es also vorgesehen, dass die Abdeckung auch über das Erreichen des Transportzielorts hinaus verschlossen gehalten wird und das Öffnen der Abdeckung nur durch die Person möglich ist. Dies realisiert eine hohe Sicherheit für das Transportgut gegenüber Diebstahl.

Schließlich kann im Rahmen einer weiteren bevorzugten Vorgehensweise vorgesehen sein, dass an der Abdeckung ein Bildschirm angeordnet ist, der in der ersten Stellung deaktiviert wird und mittels dem in der zweiten Stellung wenigstens eine Information angezeigt wird. Der Bildschirm dient der Anzeige der Information, beispielsweise wenigstens eines Status des Transportmittels und/oder Werbung. Beispielsweise ist der Bildschirm derart an der Abdeckung angeordnet, dass er lediglich in der zweiten Stellung für die Person sichtbar ist, wohingegen die Bildschirmfläche des Bildschirms in der ersten Stellung für die Person nicht sichtbar ist. Entsprechend wird der Bildschirm in der ersten Stellung vollständig deaktiviert. Dies insbesondere, weil ohnehin davon auszugehen ist, dass bei Anordnung der Abdeckung in der ersten Stellung die Person sich nicht an Bord des Transportmittels beziehungsweise auf der Stand- und/oder Sitzfläche befindet. Hingegen kann in der zweiten Stellung die Anwesenheit der Person angenommen werden, sodass bei Vorliegen derselben mittels des Bildschirms die wenigstens eine Information angezeigt wird.

Die Erfindung betrifft weiterhin ein Transportsystem mit mehreren unabhängig voneinander bewegbaren Transportmitteln zum Transportieren eines Transportguts und/oder einer Person, wobei wenigstens eines der Transportmittel gemäß den Ausführungen im Rahmen der Ansprüche 1-3 ausgestaltet ist. Dabei ist ein in einer Karosserie wenigstens eines der Transportmittel ausgebildeter Stauraum zur Aufnahme des Transportguts sowie eine Stand- und/oder Sitzfläche für die Person vorgesehen, wobei eine Abdeckung bezüglich der Karosserie und/oder des Stauraums verlagerbar ist, die in einer ersten Stellung den Stauraum verschließt und in einer zweiten Stellung freigibt, wobei die Abdeckung einen Halter für die Person aufweist, der in der zweiten Stellung oberhalb der Stand- und/oder der Sitzfläche zum Halten der Person angeordnet ist.

Erneut wird hinsichtlich vorteilhafter Weiterbildungen des Transportsystems, des Transportmittels und des Verfahrens zum Betreiben des Transportmittels auf die Ausführungen im Rahmen dieser Beschreibung verwiesen.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: ein Transportmittel, insbesondere eines Transportsystems, mit einer Karosserie, in der ein Stauraum ausgebildet ist, der mittels einer in einer ersten Stellung angeordneten Abdeckung verschlossen ist, sowie
- Figur 2: eine schematische Darstellung des Transportmittels, wobei die Abdeckung in einer zweiten Stellung angeordnet ist, in der sie den Stauraum freigibt.

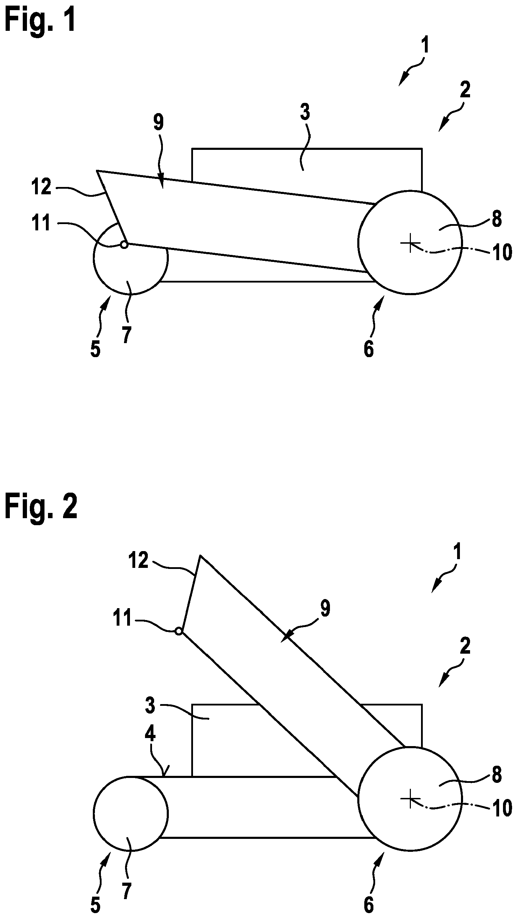

Die Figur 1 zeigt eine schematische Darstellung eines Transportmittels 1, welches beispielsweise Bestandteil einer eine Vielzahl von Transportmitteln 1 umfassenden Transportsystems ist. Das Transportmittel 1 dient zum Transportieren eines Transportguts und/oder einer Person. Es verfügt über eine Karosserie 2, in welcher ein Stauraum 3 zur Aufnahme des Transportguts ausgebildet ist. Zudem verfügt das Transportmittel 1 über eine hier nicht sichtbare Stand- und/oder Sitzfläche 4 für die Person. Das Transportmittel 1 ist als mehrachsiges Transportmittel 1, insbesondere als zweiachsiges Transportmittel 1 ausgestaltet und verfügt insoweit über mehrere Radachsen 5 und 6. An jeder der Radachsen 5 und 6 sind mehrere Räder 7 beziehungsweise 8 angeordnet, die dem Antreiben des Transportmittels 1 dienen. Das Transportmittel 1 weist weiterhin eine Abdeckung 9 auf, die bezüglich der Karosserie 2 und/oder des Stauraums 3 verlagerbar ist, in dem hier dargestellten Ausführungsbeispiel schwenkbar verlagerbar. Hierzu ist die Abdeckung 9 bezüglich der Karosserie 2 und/oder des Stauraums 3 schwenkbar gelagert, nämlich um eine Drehachse 10, welche mit der Radachse 6 zusammenfällt. In anderen Worten ist die Abdeckung 9 um dieselbe Drehachse 10 drehbar gelagert wie die Räder 8. Bevorzugt ist hierzu die Abdeckung 9 an einer nicht dargestellten Radnabe der Radachse 6 beziehungsweise wenigstens eines der Räder 8 drehbar gelagert. Die Abdeckung 9 ist in einer ersten Stellung abgebildet, in welcher sie den Stauraum 3 verschließt, sodass der Stauraum 3 aus einer Außenumgebung des Transportmittels 1 nicht zugänglich ist. Vorzugsweise verschließt die Abdeckung 9 den Stauraum 3 in der ersten Stellung vollständig.

An der Abdeckung 9 kann ein Halter 11 vorliegen, welcher dem Halten der Person dient, jedoch vorzugsweise nur in einer von der ersten Stellung verschiedenen zweiten Stellung der Abdeckung 9. Zudem ist an der Abdeckung 9 ein Bildschirm 12 angeordnet, mittels welchem zumindest zeitweise eine Information angezeigt werden kann. Die Information umfasst beispielsweise einen Status des Transportmittels 1 und/oder Werbung.

Die Figur 2 zeigt eine schematische Darstellung des Transportmittels 1, wobei die Abdeckung 9 in ihrer zweiten Stellung angeordnet ist. In dieser ist der Halter 11 oberhalb der Stand- und/oder Sitzfläche angeordnet. In der ersten Stellung hingegen kann es sein, dass der Halter 11 unterhalb der Stand-und/oder Sitzfläche vorliegt. In der zweiten Stellung ist der Halter 11 insoweit derart angeordnet, dass er dem Halten der Person dient. Die auf der Stand-und/oder Sitzfläche 4 befindliche Person kann sich insoweit an dem Halter 11 festhalten. Beispielsweise liegt der Halter 11 hierzu in Gestalt eines Griffs oder dergleichen vor. In der zweiten Stellung gibt die Abdeckung den Stauraum 3 frei, sodass in diesem befindliches Transportgut ohne weiteres aus ihm entnommen oder in ihn eingelegt werden kann.

Die beschriebene Ausgestaltung des Transportmittels 1 ermöglicht einen äußerst flexiblen Einsatz, weil es entweder allein zum Transport des Transportguts, allein zum Transport der Person oder zum Transport sowohl des Transportguts als auch der Person genutzt werden kann. Zudem ist das Transportmittel 1 durch die multifunktionale Verwendung der Abdeckung 9 einerseits zum Verschließen des Stauraums 3 und andererseits zum Halten der Person äußerst kompakt aufgebaut.

## Patentansprüche

1. Transportmittel (1) zum Transportieren eines Transportguts und/oder einer Person, mit einem in einer Karosserie (2) des Transportmittels (1) ausgebildeten Stauraum (3) zur Aufnahme des Transportguts sowie einer Stand- und/oder Sitzfläche (4) für die Person, wobei eine Abdeckung (9) um eine Drehachse (10) bezüglich des Stauraums (3) schwenkbar gelagert ist, wobei die Abdeckung (9) in einer ersten Stellung den Stauraum (3) vollständig verschließt, sodass der Stauraum (3) aus einer Außenumgebung des Transportmittels (1) nicht zugänglich ist und ein unbefugter Zugriff auf das in dem Stauraum (3) angeordnete Transportgut unterbunden wird, und in einer zweiten Stellung freigibt, sodass ein freier Zugriff auf das in dem Stauraum (3) angeordnete Transportgut ermöglicht wird, wobei die Abdeckung (9) einen Halter (11) für die Person aufweist, der in der zweiten Stellung oberhalb der Stand- und/oder der Sitzfläche (4) zum Halten der Person angeordnet ist, **dadurch gekennzeichnet, dass** die Drehachse (10) der Abdeckung (9) mit einer Radachse (6) des Transportmittels (1) zusammenfällt.

2. Transportmittel nach Anspruch 1, **dadurch gekennzeichnet, dass** die Abdeckung (9) an einer der Radachse (6) zugeordneten Radnabe drehbar gelagert ist.

3. Transportmittel nach einem der vorhergehenden Ansprüche, **dadurch gekennzeichnet, dass** an der Abdeckung (9) ein Bildschirm (12) angeordnet ist, der in der zweiten Stellung oberhalb der Stand- und/oder Sitzfläche (4) zur Benutzung durch die Person angeordnet ist.

4. Verfahren zum Betreiben eines Transportmittels (1) zum Transportieren eines Transportguts und/oder einer Person, wobei das Transportmittel (1) einen in einer Karosserie (2) des Transportmittels (1) ausgebildeten Stauraum (3) zur Aufnahme des Transportguts sowie eine Stand- und/oder Sitzfläche (4) für die Person aufweist, wobei eine Abdeckung (9) um eine Drehachse (10) bezüglich des Stauraums (3) schwenkbar gelagert ist, **dadurch gekennzeichnet, dass** die Abdeckung (9) in einer ersten Stellung den Stauraum (3) vollständig verschließt, sodass der Stauraum (3) aus einer Außenumgebung des Transportmittels (1) nicht zugänglich ist und ein unbefugter Zugriff auf das in dem Stauraum (3) angeordnete Transportgut unterbunden wird, und in einer zweiten Stellung freigibt, sodass ein freier Zugriff auf das in dem Stauraum (3) angeordnete Transportgut ermöglicht wird, wobei die Abdeckung (9) einen Halter (11) für die Person aufweist, der in der zweiten Stellung oberhalb der Stand- und/oder Sitzfläche (4) zum Halten der Person angeordnet ist, **dadurch gekennzeichnet, dass** die Drehachse (10) der Abdeckung (9) mit einer Radachse (6) des Transportmittels (1) zusammenfällt, und dass an dem Transportmittel (1) durch die Person aus einem ersten Betriebsmodus und einem zweiten Betriebsmodus ein Betriebsmodus ausgewählt und an dem Transportmittel (1) eingestellt werden kann, wobei in dem ersten Betriebsmodus die Abdeckung (9) in der ersten Stellung angeordnet und ein Fahrbetrieb des Transportmittels (1) von einem Transportstartort zu einem Transportzielort ohne die Person durchgeführt wird und in dem zweiten Betriebsmodus die Abdeckung (9) in der zweiten Stellung angeordnet und der Fahrbetrieb von dem Transportstartort zu dem Transportzielort mit der auf der Stand- und/oder Sitzfläche (4) befindlichen Person durchgeführt wird.

5. Verfahren nach Anspruch 4, **dadurch gekennzeichnet, dass** in dem ersten Betriebsmodus der Stauraum (3) mittels der Abdeckung (9) verschlossen gehalten wird, bis der Transportzielort erreicht ist und/oder die Person ein Öffnen der Abdeckung (9) an dem Transportmittel (1) einstellt.

6. Verfahren nach Anspruch 4 oder 5, **dadurch gekennzeichnet, dass** an der Abdeckung (9) ein Bildschirm (12) angeordnet ist, der in der ersten Stellung deaktiviert wird und mittels dem in der zweiten Stellung wenigstens eine Information angezeigt wird.

7. Transportsystem mit mehreren unabhängig voneinander bewegbaren Transportmitteln (1) zum Transportieren eines Transportguts und/oder einer Person, wobei wenigstens eines der Transportmittel (1) nach einem oder mehreren der Ansprüche 1 bis 3 ausgestaltet ist, mit einem in einer Karosserie (2) wenigstens eines der Transportmittel (1) ausgebildeten Stauraum (3) zur Aufnahme des Transportguts sowie eine Stand- und/oder Sitzfläche (4) für die Person, wobei eine Abdeckung (9) um eine Drehachse (10) bezüglich des Stauraums (3) schwenkbar gelagert ist, wobei die Abdeckung (9) in einer ersten Stellung den Stauraum (3) vollständig verschließt, sodass der Stauraum (3) aus einer Außenumgebung des Transportmittels (1) nicht zugänglich ist und ein unbefugter Zugriff auf das in dem Stauraum (3) angeordnete Transportgut unterbunden wird, und in einer zweiten Stellung freigibt, sodass ein freier Zugriff auf das in dem Stauraum (3) angeordnete Transportgut ermöglicht wird, wobei die Abdeckung (9) einen Halter (11) für die Person aufweist, der in der zweiten Stellung oberhalb der Stand- und/oder Sitzfläche (4) zum Halten der Person angeordnet ist **dadurch gekennzeichnet, dass** die Drehachse (10) der Abdeckung (9) mit einer Radachse (6) des Transportmittels (1) zusammenfällt.

## Claims

1. Means of transport (1) for transporting a transported good and/or a person, having a storage space (3) formed in a chassis (2) of the means of transport (1) for receiving the transported good as well as a standing and/or sitting surface (4) for the person, wherein a covering (9) is mounted so as to be pivotable about a rotational axis (10) with regard to the storage space (3), wherein the covering (9) in a first position totally closes the storage space (3), such that the storage space (3) is not accessible from an outside environment of the means of transport (1) and an unauthorised access to the transported good arranged in the storage space (3) is prevented, and in a second position exposes the storage space, such that a free access to the transported good arranged in the storage space (3) is facilitated, wherein the covering (9) has a holder (11) for the person, which is arranged in the second position above the standing and/or the sitting surface (4) for holding the person, **characterised in that** the rotational axis (10) of the covering (9) coincides with a wheel axis (6) of the means of transport (1).

2. Means of transport according to claim 1, **characterised in that** the covering (9) is mounted rotatably on a wheel hub assigned to the wheel axis (6).

3. Means of transport according to any of the preceding claims **characterised in that** on the covering (9) is arranged a screen (12) which in the second position is arranged above the standing and/or sitting surface (4) for use on the part of the person.

4. Method for operating a means of transport (1) for transporting a transported good and/or a person, wherein the means of transport (1) has a storage space (3) formed in a chassis (2) of the means of transport (1) for receiving the transported good as well as a standing and/or sitting surface (4) for the person, wherein a covering (9) is mounted so as to be pivotable about a rotational axis (10) with regard to the storage space (3), **characterised in that** the covering (9) in a first position totally closes the storage space (3), such that the storage space (3) is not accessible from an outside environment of the means of transport (1) and an unauthorised access to the transported good arranged in the storage space (3) is prevented, and in a second position exposes the storage space, such that a free access to the transported good arranged in the storage space (3) is facilitated, wherein the covering (9) has a holder (11) for the person, which is arranged in the second position above the standing and/or the sitting surface (4) for holding the person, **characterised in that** the rotational axis (10) of the covering (9) coincides with a wheel axis (6) of the means of transport (1), and that at the means of transport (1) an operating mode can be selected by the person from a first operating mode and a second operating mode and set at the means of transport (1), wherein in the first operating mode the covering (9) is arranged in the first position and a driving operation of the means of transport (1) from a transport starting location to a transport target location is carried out without the person and in the second operating mode the covering (9) is arranged in the second position and the driving operation from the transport starting location to the target location is carried out with the person being located on the standing and/or sitting surface (4).

5. Method according to claim 4, **characterised in that** in the first operating mode the storage space (3) is kept closed by means of the covering (9) until the transport target location is reached and/or the person sets the covering (9) on the means of transport (1) to open.

6. Method according to claim 4 or 5, **characterised in that** at the covering (9) is arranged a screen (12) which in the first position is deactivated and by means of which in the second position at least one item of information is displayed.

7. Transport system having several means of transport (1), movable independently from one another, for transporting a transported good and/or a person, wherein at least one of the means of transport (1) is designed according to one or more of claims 1 to 3, having a storage space (3) formed in a chassis (2) of at least one of the means of transport (1) for receiving the transported good as well as a standing and/or sitting surface (4) for the person, wherein a covering (9) is mounted so as to be pivotable about a rotational axis (10) with regard to the storage space (3), wherein the covering (9) in a first position totally closes the storage space (3), such that the storage space (3) is not accessible from an outside environment of the means of transport (1) and an unauthorised access to the transported good arranged in the storage space (3) is prevented, and in a second position exposes the storage space, such that a free access to the transported good arranged in the storage space (3) is facilitated, wherein the covering (9) has a holder (11) for the person, which is arranged in the second position above the standing and/or sitting surface (4) for holding the person, **characterised in that** the rotational axis (10) of the covering (9) coincides with a wheel axis (6) of the means of transport (1).

## Revendications

1. Moyen de transport (1) pour le transport d'une marchandise à transporter et/ou d'une personne, avec un espace de stockage (3) réalisé dans une carrosserie (2) du moyen de transport (1) pour la réception de la marchandise à transporter ainsi qu'une surface pour se tenir debout et/ou assis (4) pour la personne, dans lequel un recouvrement (9) est logé de manière pivotante autour d'un axe de rotation (10) par rapport à l'espace de stockage (3), dans lequel le recouvrement (9) ferme complètement dans une première position l'espace de stockage (3) de sorte que l'espace de stockage (3) ne soit accessible depuis un environnement extérieur du moyen de transport (1) et un accès non-autorisé à la marchandise à transporter agencée dans l'espace de stockage (3) soit empêché, et le libère dans une seconde position, de sorte qu'un accès libre à la marchandise à transporter agencée dans l'espace de stockage (3) soit permis, dans lequel le recouvrement (9) présente un support (11) pour la personne qui est agencé dans la seconde position au-dessus de la surface pour se tenir debout et/ou assis (4) pour le maintien de la personne, **caractérisé en ce que** l'axe de rotation (10) du recouvrement (9) coïncide avec un essieu (6) du moyen de transport (1).

2. Moyen de transport selon la revendication 1, **caractérisé en ce que** le recouvrement (9) est logé de manière rotative au niveau d'un moyeu de roue associé à l'essieu (6).

3. Moyen de transport selon l'une des revendications précédentes, **caractérisé en ce qu'**un écran (2) est agencé au niveau du recouvrement (9), lequel écran est agencé dans la seconde position au-dessus de la surface pour se tenir debout et/ou assis (4) pour l'utilisation par la personne.

4. Procédé de fonctionnement d'un moyen de transport (1) pour le transport d'une marchandise à transporter et/ou d'une personne, dans lequel le moyen de transport (1) présente un espace de stockage (3) réalisé dans une carrosserie (2) du moyen de transport (1) pour la réception de la marchandise à transporter ainsi qu'une surface pour se tenir debout et/ou assis (4) pour la personne, dans lequel un recouvrement (9) est logé de manière pivotante autour d'un axe de rotation (10) par rapport à l'espace de stockage (3), **caractérisé en ce que** le recouvrement (9) ferme complètement dans une première position l'espace de stockage (3) de sorte que l'espace de stockage (3) ne soit pas accessible depuis un environnement extérieur du moyen de transport (1) et un accès non-autorisé à la marchandise à transporter agencée dans l'espace de stockage(3) soit empêché, et le libère dans une seconde position, de sorte qu'un accès libre à la marchandise à transporter agencée dans l'espace de stockage (3) soit permis, dans lequel le recouvrement (9) présente un support (11) pour la personne qui est agencé dans la seconde position au-dessus de la surface pour se tenir debout et/ou assis (4) pour le maintien de la personne, **caractérisé en ce que** l'axe de rotation (10) du recouvrement (9) coïncide avec un essieu (6) du moyen de transport (1), et **en ce que** sur le moyen de transport (1), un mode de fonctionnement peut être sélectionné par la personne à partir d'un premier mode de fonctionnement et d'un second mode de fonctionnement et réglé sur le moyen de transport (1), dans lequel dans le premier mode de fonctionnement, le recouvrement (9) est agencé dans la première position et une opération de roulage du moyen de transport (1) est réalisée d'un lieu de départ de transport à une destination de transport sans la personne et dans le second mode de fonctionnement, le recouvrement (9) est agencé dans la seconde position et l'opération de roulage est réalisée du lieu de départ de transport à la destination de transport avec la personne se trouvant sur la surface pour se tenir debout et/ou assis (4).

5. Procédé selon la revendication 4, **caractérisé en ce que** dans le premier mode de fonctionnement, l'espace de stockage (3) est maintenu fermé au moyen du recouvrement (9) jusqu'à ce que la destination de transport soit atteinte et/ou la personne règle une ouverture du recouvrement (9) sur le moyen de transport (1).

6. Procédé selon la revendication 4 ou 5, **caractérisé en ce qu'**un écran (12) est agencé sur le recouvrement (9), lequel écran est désactivé dans la première position et au moyen duquel dans la seconde position, au moins une information est affichée.

7. Système de transport avec plusieurs moyens de transport (1) mobiles indépendamment les uns des autres pour le transport d'une marchandise à transporter et/ou d'une personne, dans lequel au moins un des moyens de transport (1) est configuré selon l'une ou plusieurs des revendications 1 à 3, avec un espace de stockage (3) réalisé dans une carrosserie (2) au moins d'un des moyens de transport (1) pour la réception de la marchandise à transporter ainsi qu'une surface pour se tenir debout et/ou assis (4) pour la personne, dans lequel un recouvrement (9) est logé de manière pivotante autour d'un axe de rotation (10) par rapport à l'espace de stockage (3), dans lequel le recouvrement (9) ferme complètement dans une première position l'espace de stockage (3) de sorte que l'espace de stockage (3) ne soit accessible depuis un environnement extérieur du moyen de transport (1) et un accès non-autorisé à la marchandise à transporter agencé dans l'espace de stockage (3) soit empêché, et le libère dans une seconde position de sorte qu'un accès libre à la marchandise à transporter agencé dans l'espace de stockage (3) soit permis, dans lequel le recouvrement (9) présente un support (11) pour la personne qui est agencé dans la seconde position au-dessus de la surface pour se tenir debout et/ou assis (4) pour le maintien de la personne, **caractérisé en ce que** l'axe de rotation (10) du recouvrement (9) coïncide avec un essieu (6) du moyen de transport (1).
